Europäisches Patentamt

European Patent Office

Office européen des brevets

(19)

(11) EP 0 866 985 B1

(12) FASCICULE DE BREVET EUROPEEN

(45) Date de publication et mention
de la délivrance du brevet:
**13.10.1999 Bulletin 1999/41**

(21) Numéro de dépôt: **96938097.1**

(22) Date de dépôt: **05.11.1996**

(51) Int Cl.6: **G01S 13/58**, G01S 13/93

(86) Numéro de dépôt international:
**PCT/EP96/04829**

(87) Numéro de publication internationale:
**WO 97/21111 (12.06.1997 Gazette 1997/25)**

(54) **PROCEDE DE MESURE DE LA VITESSE D'UN VEHICULE PAR RAPPORT AU SOL, AU MOYEN D'UN RADAR UTILISANT LA REFLEXION D'ONDES ELECTROMAGNETIQUES SUR LA CHAUSSEE**

VERFAHREN ZUR MESSUNG DER BODENGESCHWINDIGKEIT EINES FAHRZEUGS MITTELS RADAR UNTER VERWENDUNG DER REFLEKTION DER ELEKTROMAGNETISCHEN WELLEN VON DER FAHREBENE

METHOD FOR MEASURING THE GROUND SPEED OF A VEHICLE BY MEANS OF A RADAR USING THE REFLECTION OF ELECTROMAGNETIC WAVES ON THE DRIVING SURFACE

(84) Etats contractants désignés:
**DE GB**

(30) Priorité: **05.12.1995 FR 9514525**

(43) Date de publication de la demande:
**30.09.1998 Bulletin 1998/40**

(73) Titulaire: **SIEMENS AUTOMOTIVE S.A.**
**31036 Toulouse Cédex (FR)**

(72) Inventeurs:
• **CREMONA, Patrick**
**F-31850 Montrabe (FR)**

• **KUNERT, Martin**
**D-93102 Geisling (DE)**

(74) Mandataire: **Epping, Wilhelm, Dr.-Ing. et al**
**Patentanwalt**
**Postfach 22 13 17**
**80503 München (DE)**

(56) Documents cités:
**EP-A- 0 412 719          EP-A- 0 612 641**
**DE-A- 4 225 653**

# Description

La présente invention est relative à un procédé de mesure de la vitesse d'un véhicule par rapport au sol, au moyen d'un radar utilisant la réflexion d'ondes électromagnétiques sur la chaussée.

La vitesse d'un véhicule par rapport au sol est classiquement mesurée en utilisant la vitesse de rotation des roues du véhicule, et plus particulièrement des roues non motrices. Cependant, dans certains cas, comme lors du blocage de ces roues lors d'un freinage, ou pour des véhicules dont toutes les roues sont motrices, cette mesure de la vitesse peut être erronée. On a donc proposé d'autres méthodes de mesure de la vitesse, par exemple utilisant l'effet Doppler.

On connaît de la technique antérieure, par exemple du document US 5,243,564, correspondant au document DE-A-42 25 653, un dispositif de mesure de la vitesse d'un véhicule automobile utilisant la modification, due à l'effet Doppler, de la fréquence d'une onde ultrasonique émise par le véhicule et réfléchie par le sol vers celui-ci. Dans ce document, il est proposé de compenser l'un des problèmes liés à ce type de mesure, en l'occurrence l'influence de l'assiette horizontale du véhicule sur la mesure, au moyen d'un dispositif utilisant la vitesse de rotation des roues mesurée par un système d'antiblocage pour déterminer un angle de cabrage du véhicule. Cependant, outre qu'un tel système est coûteux car nécessitant l'équipement du véhicule avec un antiblocage, la mesure qu'il permet d'obtenir peut être encore entachée d'erreur. En effet, et notamment si l'on emploie une onde électromagnétique (onde radar) pour améliorer la précision, on se heurte à de nombreux facteurs de perturbation propres au milieu routier. En particulier, l'onde réfléchie vers le récepteur du véhicule peut avoir parcouru de multiples chemins et/ou avoir été réfléchie par des cibles parasites. En conséquence, l'analyse fréquentielle effectuée pour extraire l'information vitesse peut être aisément perturbée par ces conditions et conduire à des résultats erronés, d'autant plus difficiles à détecter qu'ils peuvent être vraisemblables.

La présente invention a donc pour but de fournir un procédé de mesure de la vitesse d'un véhicule par rapport au sol dont les résultats présentent une fiabilité accrue sans requérir de dispositif complémentaire.

On atteint ces buts de l'invention, ainsi que d'autres qui apparaîtront dans la suite de la présente description, par un procédé de mesure de la vitesse d'un véhicule par rapport au sol tel que défini dans la revendication 1.

Suivant une caractéristique importante de la présente invention, on élimine la mesure de vitesse si la mesure de distance associée n'appartient pas à une plage de distance prédéterminée encadrant une distance fixe correspondant à la distance du radar au sol. Avantageusement, cette plage de distance peut être variable en fonction des mesures de la vitesse du véhicule effectuées précédemment.

D'autres caractéristiques et avantages du procédé suivant l'invention apparaîtront à la lecture de la description qui va suivre et à l'examen des dessins annexés dans lesquels:

- la figure 1 représente un véhicule équipé d'un dispositif de mesure de la vitesse dans une situation présentant des risques de perturbation,
- la figure 2 représente un diagramme des ondes émises et reçues par un radar de type FMCW, utile à la compréhension de l'invention, et
- la figure 3 représente un logigramme du procédé selon l'invention.

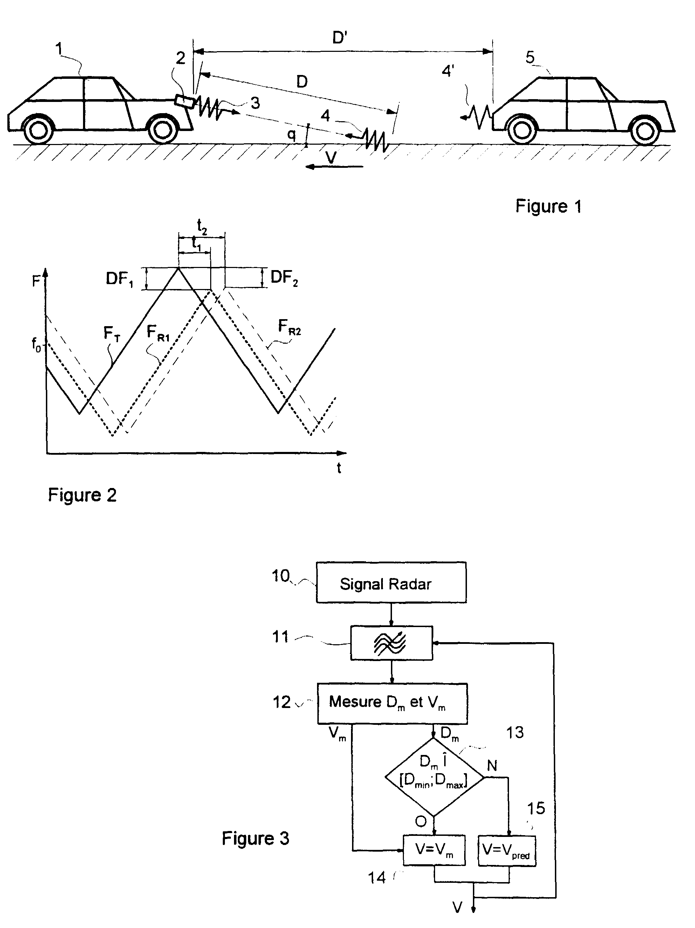

On se réfère à la figure 1 où on a représenté un véhicule automobile 1 équipé d'un radar 2. Ce radar émet une onde électromagnétique 3 en direction du sol sous une incidence q et reçoit en écho une onde réfléchie 4. Classiquement, en analysant la variation de la fréquence de l'onde réfléchie 4 par rapport à l'onde émise 3, liée à l'effet Doppler, on peut déduire la vitesse relative V du sol par rapport au véhicule par l'équation:

$$V = \frac{c \times \Delta F}{(F_T + F_R) \times cos\theta}$$

où $F_T$ est la fréquence de l'onde émise, $F_R$ celle de l'onde reçue en écho par le radar, $DF = F_R - F_T$ est la différence de fréquence due à l'effet Doppler et c est la vitesse de propagation des ondes. Cependant, dans des conditions normales d'exploitation, l'onde émise 3 peut être également réfléchie par de nombreux obstacles, fixes ou mobiles, comme par exemple par un véhicule 5 précédant le véhicule 1 équipé du radar. Ce dernier reçoit alors également un écho parasite 4' réfléchi par le véhicule 5. De ce fait l'écho reçu par le radar 2 a une fréquence $F_R$ composite, correspondant à la combinaison des échos 4 et 4', et liée aux vitesses relatives respectives du sol et du véhicule 5 par rapport au véhicule 1.

Hormis la solution consistant à comparer la vitesse obtenue par le traitement du signal radar avec une information vitesse obtenue par exemple au moyen d'un dispositif classique mesurant la vitesse de rotation des roues du véhicule, on peut tenter de résoudre cette indétermination par un filtrage approprié de la fréquence reçue, par exemple au moyen d'un filtre de Kalman, permettant de suivre le pic de fréquence correspondant à l'écho du sol. Cependant, outre qu'une telle solution nécessite une procédure d'initialisation effectuée à l'abri d'échos parasites, on a pu constater qu'elle pouvait être mise en défaut, par exemple lorsque le véhicule 5 est à l'arrêt lorsqu'il entre dans le champ du radar, et accélère ensuite. Dans ce cas, le filtre peut se fixer sur l'écho parasite 4' et fournir une vitesse résultante erronée quoique vraisemblable. Ceci est particulièrement vrai lorsque l'écho en provenance du sol est faible, comme c'est le cas sur sol mouillé, l'écho parasite devenant prépondérant.

Selon l'invention, on utilise un radar permettant d'obtenir simultanément une mesure de la distance et de la vitesse relatives, tel qu'un radar Doppler à impulsion, ou encore, comme dans l'exemple ci-après, un radar du type à ondes continues modulées en fréquence, plus connu sous le nom de radar FMCW. Ce type de radar, connu en soi, dont le diagramme temporel des ondes émises et reçues est représenté à la figure 2, présente l'avantage de donner simultanément une mesure de la vitesse et de la distance relative du radar à un objet. Ce radar émet une onde incidente de fréquence $F_T$ modulée en fréquence par exemple par une modulation triangulaire autour d'une fréquence centrale $f_0$. L'écho reçu par le radar dans le cas de la figure 1 peut être décomposé par un filtrage approprié en deux fréquences $F_{R1}$ et $F_{R2}$. On peut alors constater que les décalages temporels $t_1$ et $t_2$, correspondant au temps de propagation des ondes et donc à la distance radar-cible, et fréquentiels $DF_1$ et $DF_2$, correspondant à la différence de fréquence due à l'effet Doppler et donc à la vitesse relative des cibles, qui sont classiquement calculés par une combinaison linéaire des fréquences de battement montantes et descendantes permettent de définir des couples (vitesse; distance) $(V_1, D_1)$ et $(V_2, D_2)$ correspondant respectivement aux fréquences $F_{R1}$ et $F_{R2}$. Comme la distance D du radar au sol est fixée par construction, il devient donc possible de distinguer, en comparant les distances obtenues avec cette distance D, lequel des deux couples correspond à la mesure recherchée.

Bien entendu, cette analyse qui peut être effectuée avec plus de deux fréquences, n'est pas nécessaire à chaque mesure. En utilisant un filtrage approprié comme vu précédemment, il est possible de ne procéder à une analyse complète que lors de l'initialisation ou lorsqu'une erreur de mesure est rencontrée.

On a schématiquement représenté le procédé à la figure 3. Le signal radar reçu à l'étape 10 est filtré à l'étape 11 par un filtre réglable. Ce filtrage sélectionne l'un des pics de fréquence reçu. Sur la base de la fréquence sélectionnée, on procède à l'étape 12 au calcul du couple distance $D_m$ et vitesse $V_m$ mesurés. On vérifie alors à l'étape 13 que la distance mesurée appartient à une plage de distances $[D_{min}; D_{max}]$ encadrant la distance fixe D. Cette plage peut être avantageusement définie en fonction des valeurs de la vitesse précédemment mesurées. Par exemple, lorsque les mesures précédentes révèlent une accélération du véhicule, on pourra élargir la plage en augmentant la valeur de $D_{max}$ pour prendre en compte le cabrage du véhicule. Si la distance mesurée appartient à la plage de distance, on passe à l'étape 14, où la vitesse $V_m$ sera retenue comme vitesse V du véhicule. Dans le cas contraire, à l'étape 15, on affecte à la vitesse V du véhicule une vitesse prédite par extrapolation des mesures précédentes. En fonction du résultat retenu pour la vitesse du véhicule, on réagit sur l'étape de filtrage 11, soit pour asservir le filtre à la fréquence actuelle si la vitesse mesurée a été retenue, soit pour sélectionner un autre pic de fréquence si la vitesse mesurée ne correspondait pas à la vitesse relative du véhicule par rapport au sol.

## Revendications

1. Procédé de mesure de la vitesse (V) d'un véhicule (1) par rapport au sol, du type utilisant l'écart de fréquence lié à l'effet Doppler entre une onde émise (3) par un radar (2) solidaire du véhicule et une onde réfléchie (4) correspondant à l'onde émise après reflexion par le sol, caractérisé en ce que l'on utilise un radar du type permettant d'obtenir simultanément des mesures de la distance ($D_m$) et de la vitesse ($V_m$) relatives entre le radar et une cible, et en ce que l'on utilise la mesure de la distance entre le radar et le point de reflexion de l'onde sur le sol pour valider la mesure de vitesse.

2. Procédé selon la revendication 1, caractérisé en ce que l'on élimine la mesure de vitesse si la mesure de distance associée n'appartient pas à une plage de distance $[D_{min}; D_{max}]$ prédéterminée encadrant une distance (D) fixe correspondant à la distance du radar au sol.

3. Procédé selon la revendication 2, caractérisé en ce que la plage de distance considérée varie en fonction des mesures de la vitesse du véhicule effectuées précédemment.

## Patentansprüche

1. Verfahren zum Messen der Geschwindigkeit (V) eines Fahrzeugs (1) bezüglich der Straßenoberfläche unter Verwendung des mit dem Doppler-Effekt verknüpften Frequenzabstandes zwischen einer von einem fahrzeugfesten Radar (2) abgegebenen Welle (3) und einer reflektierten Welle (4) entsprechend der Welle, die nach Reflektion an der Straßenoberfläche abgegeben wird, dadurch gekennzeichnet, daß ein Radar verwendet wird, das gleichzeitig Messungen des relativen Abstandes ($D_m$) und der relativen Geschwindigkeit ($V_m$) zwischen dem Radar und einem Ziel erlaubt, und daß die Messung des Abstandes zwischen dem Radar und dem Reflexionspunt der Welle an der Straßenoberfläche dazu benutzt wird, die Geschwindigkeitsmessung zu validieren.

2. Verfahren nach Anspruch 1, dadurch gekennzeichnet, daß auf die Messung der Geschwindigkeit verzichtet wird, wenn die zughörige Messung des Abstandes nicht in einen vorgegebenen Abstandsbe-

reich [$D_{min}$; $D_{max}$] fällt, der einen festen Abstand (D) entsprechend dem Abstand des Radars von der Straßenoberfläche umfaßt.

3. Verfahren nach Anspruch 1, dadurch gekennzeichnet, daß sich der betrachtete Abstandsbereich in Abhängigkeit von vorhergehenden Messungen der Fahrzeuggeschwindigkeit ändert.

## Claims

1. Method of measurement of the speed (V) of a vehicle (1) in relation to the ground, of the type using the frequency deviation, related to the Doppler effect, between a wave (3) transmitted by a radar (2) which is integral to the vehicle and a reflected wave (4) corresponding to the transmitted wave after reflection by the ground, characterised in that use is made of a radar of the type enabling relative measurements of distance ($D_m$) and speed ($V_m$) between the radar and a target to be obtained simultaneously, and in that use is made of the measurement of the distance between the radar and the point of reflection of the wave on the ground to validate the speed measurement.

2. Method according to claim 1, characterised in that the speed measurement is ruled out if the associated distance measurement does not belong to a predetermined distance range ($D_{min}$; $D_{max}$) delineating a fixed distance D corresponding to the radar-ground distance.

3. Method according to claim 2, characterised in that the distance range considered varies as a function of the vehicle speed measurements made previously.

Figure 1

Figure 2

Figure 3